# EUROPEAN PATENT APPLICATION

(11) **EP 2 560 421 A1**
(43) Date of publication of application: **20.02.2013**
(21) Application number: 12004981.2
(22) Date of filing: 05.07.2012
(51) Int. Cl.: H04W 8/00, H04L 29/12

(54) **Contact list sharing method**

(30) Priority: 05.07.2011 US 201161504317 P; 13.06.2012 US 201213517563
(71) Applicant: HTC Corporation, Taoyuan County 330 (TW)
(72) Inventor: Chen, Li-Hui, Taoyuan City County 330 (TW); Liu. Te-Chuan, Taoyuan City County 330 (TW); Lin, Jen-Chiun, Taoyuan City County 330 (TW); Jan, Cheng-Shiun, Taoyuan City County 330 (TW)
(74) Representative: Wagner & Geyer

(57) **Abstract**

A virtual group contact list of a first mobile electronic device is generated using a wireless service under the purpose of finding contact information of users not stored in a contact list of the first mobile electronic device, by confirming whether there are other surrounding mobile electronic devices utilizing the wireless communication service and responding to a polling signal from the first mobile electronic device. A user of the first mobile electronic device is able to contact a wanted user whose contact information stored in contact lists of confirmed or identified mobile electronic devices giving responses to the first mobile electronic device.

## Description

### Cross Reference To Related Applications

This application claims priority of US Provisional No. 61/504,317 filed on July 4, 2011.

### Background of the Invention

### 1. Field of the Invention

The present invention relates to a contact list sharing method, and more particularly, a contact list sharing method by using a wireless communication service.

### 2. Description of the Prior Art

A mobile electronic device user, such as a mobile phone user, may have multiple groups of contacts in a database of his/her mobile electronic device. Contact groups can be classified into subjects including families, friends, work team members, professional acquaintances, emergency contacts, and etc. One group member of the contact group may maintain a group contact list for the entire contact group and update it periodically. When updates occur, the rest of the members of the contact group have to correspondingly update the group contact list manually, or correctness of the group contact list may fail.

Besides, when a group member intends to update the group contact list, it usually requires complicated manual operations at bad timings, e.g., when the group member is busy, for inputting updated information.

### Summary of the Invention

The claimed invention discloses a contact list sharing method using a wireless service. The contact list sharing method comprises broadcasting a polling signal based on a wireless communication protocol by a first mobile electronic device; confirming, by the first mobile electronic device, whether there is a second mobile electronic device using the wireless communication protocol by receiving a response signal, which is in response to the polling signal, from the second mobile electronic device; and merging a contact list of the second mobile electronic device into a virtual group contact list of the first mobile electronic device when the first mobile electronic device receives the response signal.

These and other objectives of the present invention will no doubt become obvious to those of ordinary skill in the art after reading the following detailed description of the preferred embodiment that is illustrated in the various figures and drawings.

### Brief Description of the Drawings

FIG. 1 illustrates a first mobile electronic device and a plurality of second mobile electronic devices for explaining the contact list sharing method of the present invention.
FIG. 2 and FIG. 3 illustrate the contact list sharing method according to two embodiments of the present invention.

### Detailed Description

For preventing inconvenience for a group member to update the group contact list, a contact list sharing method by using a wireless service is disclosed in the present invention. Note that the wireless services utilized in the present invention may be based on wireless protocols fitting near field communication (NFC) , for example, Bluetooth, WiFi, or WiFi direct.

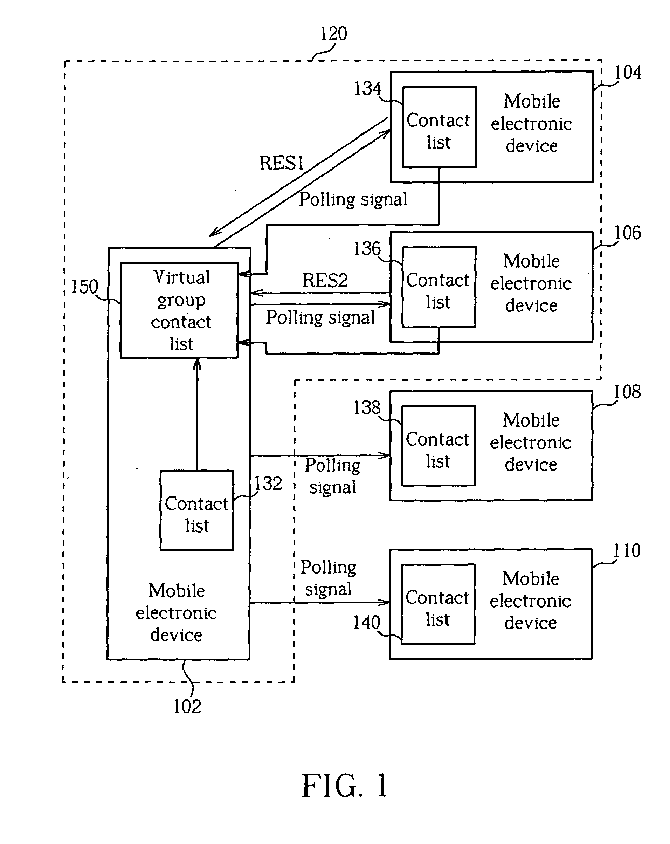

Please refer to FIG. 1, which illustrates a mobile electronic device 102 and a plurality of mobile electronic devices 104, 106, 108 and 110 for explaining the contact list sharing method of the present invention, where the mobile electronic devices 102, 104, 106, 108 and 110 respectively have contact lists 132, 134, 136, 138 and 140. The mobile electronic device 102 is configured to broadcast a polling signal based on a wireless communication protocol, such as the above-mentioned wireless communication protocols. The mobile electronic devices 104, 106, 108, and 110 are assumed to receive the polling signal, however, only the mobile electronic devices 104 and 106 are assumed to utilize the same wireless communication protocol that the mobile electronic device 102 utilizes. Therefore, each of the mobile electronic devices 104 and 106 responds the mobile electronic device 102 with a response signal RES1 or RES2.

In embodiments of the present invention, since the wireless communication protocol is based on near field communication, some other mobile electronic devices utilizing the wireless communication protocol and falling outside of the capability of the mobile electronic device 102 in broadcasting the polling signal will not receive nor respond to the polling signal.

After receiving the response signals RES1 and RES2, the mobile electronic device 102 is able to confirm existence of both the mobile electronic devices 104 and 106.

It is assumed that a user of the mobile electronic device 102 intends to contact a wanted user whose contact information does not exist in the contact list 132, where the contact information may be stored in at least one of the mobile electronic devices 104 and 106. With the aid of the disclosed contact list sharing method, a virtual contact list merging a plurality of contact lists from the mobile electronic devices 102, 104, and 106 is retrieved so that the contact information of the wanted user may also be included in the virtual group contact list. As a result, contact information of the wanted user may be accessed by the user of the mobile electronic device 102 via accessing the virtual group contact list.

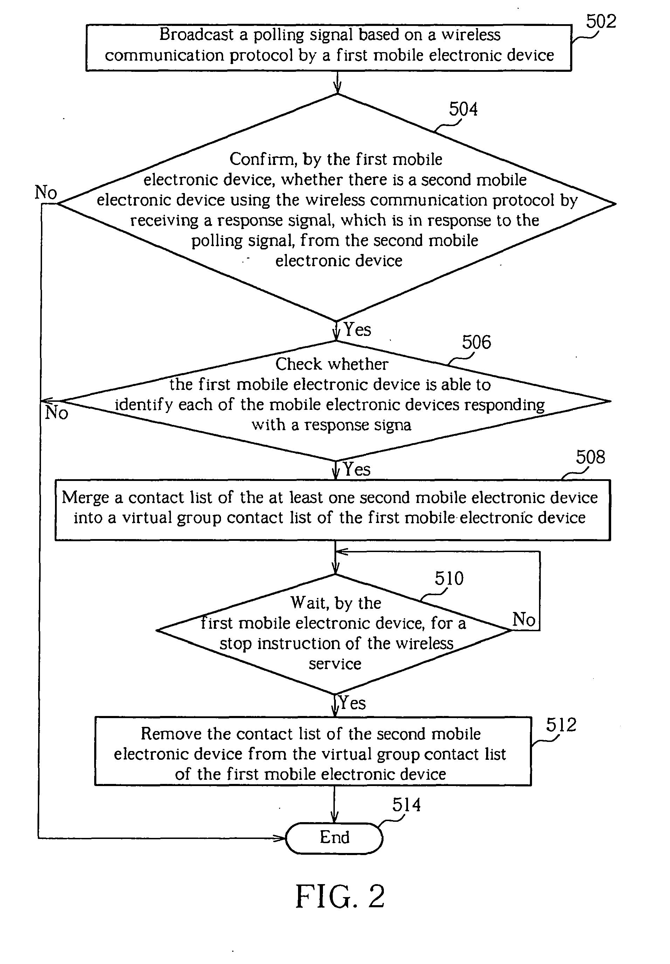

Please refer to FIG. 2, which illustrates the contact list sharing method according to a first related embodiment of the present invention. As shown in FIG. 2, the contact list sharing method shown in FIG. 2 includes steps as follows:
- Step 502:: Broadcast a polling signal based on a wireless communication protocol by a first mobile electronic device, and go to Step 504.
- Step 504:: Confirm, by the first mobile electronic device, whether there is a second mobile electronic device using the wireless communication protocol by receiving a response signal, which is in response to the polling signal, from the second mobile electronic device; when there is the at least one second mobile electronic device using the wireless communication protocol is confirmed, go to Step 506; else, go to Step 514.
- Step 506:: Check whether the first mobile electronic device is able to identify each of the mobile electronic devices responding with a response signal; for those mobile electronic devices that can be identified by the first mobile electronic device, go to Step 508; for other mobile electronic devices that cannot be identified by the first mobile electronic device, go to Step 514.
- Step 508:: Merge a contact list of the at least one second mobile electronic device into a virtual group contact list of the first mobile electronic device, and go to Step 510.
- Step 510:: Wait, by the first mobile electronic device, for a stop instruction of the wireless service; if the stop instruction is received, go to Step 512; else, go to Step 510.
- Step 512:: Remove the contact list of the second mobile electronic device from the virtual group contact list of the first mobile electronic device, and go to Step 514.
- Step 514:: End.

The contact list sharing method shown in FIG. 2 will be explained with the aid of mobile electronic devices shown in FIG. 1. Note that the first mobile electronic device mentioned in the steps of FIG. 2 may indicate the mobile electronic device 102 shown in FIG. 1, and the at least one second mobile electronic device mentioned in the steps shown in FIG. 2 may indicate at least one of the mobile electronic devices 104 and 106.

In Step 502, when the user of the mobile electronic device 102 intends to contact the wanted user, the wireless service installed on the mobile electronic device 102 is activated. Note that Step 502 may be optional if the wireless service has been activated before the user of the mobile electronic device 102 intends to contact the wanted user.

In Step 504, the mobile electronic device 102 confirms whether there is at least one mobile electronic device using the same wireless communication protocol as the mobile electronic device 102 utilizes, by receiving a response signal in response to the polling signal. If the mobile electronic device 102 receives at least one response signal, it indicates the fact that there is at least one other mobile electronic device falling within an available range/distance of communication of/from the mobile electronic device 102 and utilizing the same wireless communication protocol as well.

As can be observed in FIG. 1, both the mobile electronic devices 104 and 106 will be processed in Step 506 by the mobile electronic device 102 since the mobile electronic devices 104 and 106 respond with response signals RES1 and RES2 respectively, and since the mobile electronic device 102 receives both the response signals RES1 and RES2. Both the mobile electronic device 108 and 110 will not be processed in Step 506 by mobile electronic device 102 since the wireless communication protocol utilized by the mobile electronic device 102 is not utilized on either one of the mobile electronic devices 108 and 110.

In Step 506, the responding mobile electronic devices 104 and 106 are further checked to confirm whether the mobile electronic device 102 is able to recognize the mobile electronic devices 104 and 106, for security issues. The condition of checking recognition may include check whether identities of the checked mobile electronic devices are recorded in the contact list of the mobile electronic device 102. Both the mobile electronic devices 104 and 106 are assumed to be recognizable for the mobile electronic device 102. Therefore, a virtual group 120 including the mobile electronic devices 102, 104 and 106 can be temporarily formed under mutual recognition. Furthermore, each of the mobile electronic devices 102, 104, and 106 may keep a respective right of quitting the virtual group 120 in some embodiments of the present invention.

In Step 508, since members of the virtual group 120 are authorized to access respective contact lists with each other, a virtual group contact list 150 is temporarily generated in the mobile electronic device 102 by merging contact information of the contact lists 132, 134 and 136, where merging the contact information of the contact lists 132, 134 and 136 may indicate transmitting contents of the contact lists 132, 134 and 136 to the first mobile electronic device 102. If the contact information of the wanted user happens to be previously stored in anyone of the contact lists 134 and 136, the mobile electronic device 102 is capable of accessing the contact information of the wanted user via the virtual group contact list 150 so that the user of the mobile electronic device 102 is able to contact the wanted user by using the contact information in the virtual group contact list 150.

In Step 510, no matter whether the mobile electronic device 102 finds the contact information of the wanted user in the virtual group contact list 150 or not, the mobile electronic device 102 waits for a stop instruction based on the wireless service to cancel or reform the virtual group 120 if anyone of the mobile electronic devices 102, 104 and 106 triggers the stop instruction. The stop instruction may be triggered by the mobile electronic device 102 after accessing or utilizing the contact information of the wanted user, when at least one of the mobile electronic devices 104 and 106 is moved away and does not respond to the mobile electronic device 102 for a predetermined period of time, i.e. located outside the proximity of the mobile electronic device 102, or when a signal magnitude of communication between the mobile electronic devices is weaker than a predetermined magnitude. The stop instruction may also be triggered by anyone of the mobile electronic devices 102, 104 and 106 when the user of anyone of the mobile electronic devices 102 or 104 or 106 intends to stop sharing his/her contact list.

In Step 512, after the stop instruction is triggered, a contact list is removed from the virtual group contact list 150 and a corresponding mobile electronic device is removed from the virtual group 120, in correspondence with the stop instruction. For example, if the mobile electronic device 104 triggers the stop instruction, the mobile electronic device 102 will remove the contact list 134 from the virtual group contact list 150, and the mobile electronic device 104 is also removed from the virtual group 120. If the mobile electronic device 102 triggers the stop instruction, the mobile electronic device 102 will directly remove the virtual group contact list 150 and the virtual group 120 since the mobile electronic device 102 is founder of both the virtual group contact list 150 and the virtual group 120. Note that Step 512 is optional in other embodiments of the present invention. It indicates that the mobile electronic device 102 may still hold contact information from either one of the mobile electronic devices 104 and 106 even if the stop instruction is received.

In one embodiment of the present invention, the mobile electronic devices 102, 104 and 106 may assign a predetermined time, a predetermined location, or both, for completing mutual recognition performed in Step 502, Step 504, and Step 506, where the predetermined time or the predetermined location may be set or updated by the mobile electronic device 102 in advance. And the sharing of contact information is only granted during predetermined time, for the purpose of improving security.

Note that there may also be a virtual group contact list in the mobile electronic devices 104 and 106, and operations of the virtual group contact list in the mobile electronic devices 104 and 106 are the same as the virtual group contact list 150. For example, a virtual group contact list of the mobile electronic device 104 may include the contact list 132 transmitted from the first mobile electronic device 102.

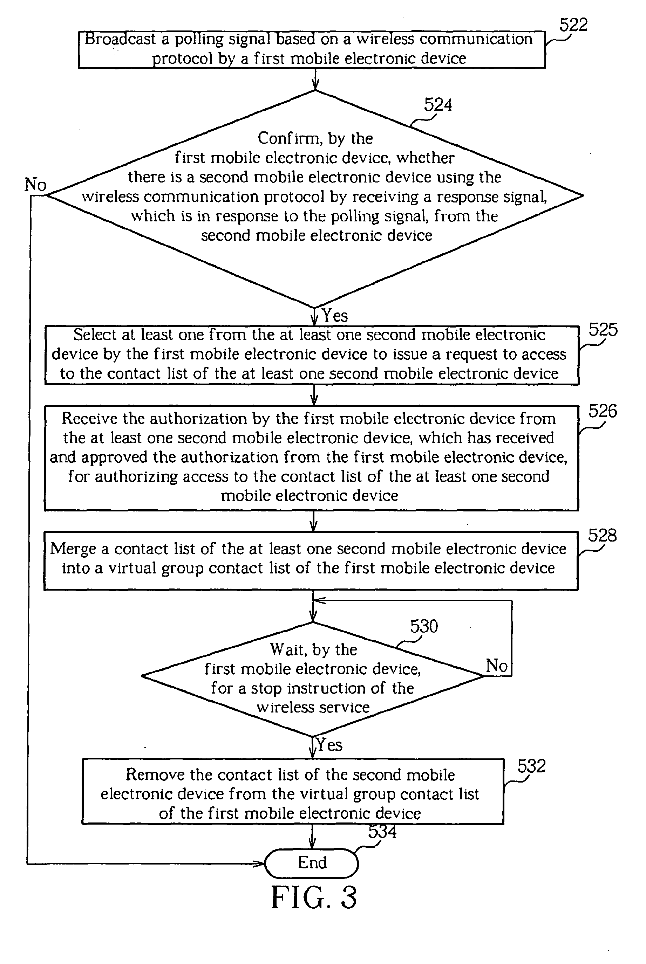

In a second embodiment of the present invention, members of the virtual group 120 can be selectively authorized by the mobile electronic device 102 even if all the members in virtual group 120 have the wireless service activated. Please refer to FIG. 3, which illustrates the contact list sharing method according to the second embodiment of the present invention. The contact list sharing method includes steps as follows:
- Step 522:: Broadcast a polling signal based on a wireless communication protocol by a first mobile electronic device, and go to Step 524.
- Step 524:: Confirm, by the first mobile electronic device, whether there is a second mobile electronic device using the wireless communication protocol by receiving a response signal, which is in response to the polling signal, from the second mobile electronic device; when there is the at least one second mobile electronic device using the wireless communication protocol is confirmed, go to Step 525; else, go to Step 534.
- Step 525:: Select at least one from the at least one second mobile electronic device by the first mobile electronic device to issue a request to access to the contact list of the at least one second mobile electronic device, and go to Step 526.
- Step 526:: Receive the authorization by the first mobile electronic device from the at least one second mobile electronic device, which has received and approved the authorization from the first mobile electronic device, for authorizing access to the contact list of the at least one second mobile electronic device, and go to Step 528.
- Step 528:: Merge a contact list of the at least one second mobile electronic device into a virtual group contact list of the first mobile electronic device, and go to Step 530.
- Step 530:: Wait, by the first mobile electronic device, for a stop instruction of the wireless service; if the stop instruction is received, go to Step 532; else, go to Step 534.
- Step 532:: Remove the contact list of the second mobile electronic device from the virtual group contact list of the first mobile electronic device, and go to Step 534.
- Step 534:: End.

The primary difference between the embodiments shown in FIG. 2 and FIG. 3 lies in authorization, where the mobile electronic device 102 may select only one of the mobile electronic devices 104 and 106 to request for authorization in transmitting contact lists, instead of choosing all of the identified mobile electronic devices 104 and 106 for sharing contact information in FIG. 2.

Note that Step 532 is also optional in other embodiments of the present invention. It indicates that the mobile electronic device 102 may still hold contact information from either one of the mobile electronic devices 104 and 106 even if the stop instruction is received.

In one embodiment of the present invention, the mobile electronic devices 102, 104 and 106 may assign a predetermined time, a predetermined location, or both, for completing authorization performed in Step 522, Step 524, Step 525 and Step 526. And the sharing of contact information is only granted during predetermined time, for the purpose of improving security.

Note that embodiments formed by adding the above-mentioned limitations in the steps shown in FIGs. 2-3 or by reasonable combinations or permutations of the steps shown in FIGs. 2-3 should also be regarded as embodiments of the present invention.

In other embodiments of the present invention related to as disclosed in FIG. 3, the mobile electronic device 102 may select part of the second mobile electronic devices to request for authorization instead of selecting merely one.

A non-transitory machine readable media may be utilized for storing computer codes programmed according to the contact list sharing method of the present invention, such as the contact list sharing method disclosed in FIGs. 1-3, so that the stored computer codes may be run by a processor of any kind of mobile electronic device to fulfill the purpose of the present invention. In one embodiment of the present invention, the non-transitory machine readable media comprises a first computer code, a second computer code, and a third computer code. When executed by a processor of a first mobile electronic device, the first computer code is configured to broadcast a polling signal based on a wireless communication protocol. When executed by the processor of the first mobile electronic device, the second computer code confirms, by the first mobile electronic device, whether there is a second mobile electronic device using the wireless communication protocol by receiving a response signal, which is in response to the polling signal, from the second mobile electronic device. When executed by the processor of the first mobile electronic device, the third computer code is configured to merge a contact list of the second mobile electronic device into a virtual group contact list of the first mobile electronic device when the first mobile electronic device receives the response signal.

The present invention discloses a contact list sharing method by using a wireless service. With the aid of the contact list sharing method, a user of a mobile electronic device is able to contact a wanted user whose contact information does not be stored in a contact list of the mobile electronic device if the contact information of the wanted user happens to be stored in another mobile electronic device responds to the mobile electronic device and utilizes a same wireless communication protocol as the mobile electronic device utilizes.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A contact list sharing method using a wireless service, comprising:
broadcasting a polling signal based on a wireless communication protocol by a first mobile electronic device;
confirming, by the first mobile electronic device, whether there is a second mobile electronic device using the wireless communication protocol by receiving a response signal, which is in response to the polling signal, from the second mobile electronic device; and
merging a contact list of the second mobile electronic device into a virtual group contact list of the first mobile electronic device when the first mobile electronic device receives the response signal.

2. The contact list sharing method of claim 1 further comprising merging a contact list of the first mobile electronic device into the virtual group contact list of the first mobile electronic device.

3. The contact list sharing method of claim 1 further comprising:
waiting, by the first mobile electronic device, for a stop instruction of the wireless service; and
removing the contact list of the second mobile electronic device from the virtual group contact list of the first mobile electronic device when the stop instruction is received.

4. The contact list sharing method of claim 3 wherein the stop instruction is triggered by the second mobile electronic device when a signal magnitude of communication between the first mobile electronic device and the second mobile electronic device is weaker than a predetermined magnitude.

5. The contact list sharing method of claim 3 wherein the stop instruction is triggered by the second mobile electronic device deactivating the wireless communication protocol.

6. The contact list sharing method of claim 3 wherein the stop instruction is triggered by the first mobile electronic device.

7. The contact list sharing method of claim 1 further comprising:
selecting the second mobile electronic device to issue a request to access to the contact list of the second mobile electronic mobile device; and
receiving by the first mobile electronic device an authorization from the second mobile electronic device for authorizing the access to the contact list of the second mobile electronic mobile device.

8. The contact list sharing method of claim 1 further comprising the second mobile electronic device transmitting the contact list of the second mobile electronic mobile device to the first electronic mobile device by using the wireless communication protocol.

9. The contact list sharing method of claim 1 further comprising the first mobile electronic device transmitting the contact list of the first mobile electronic mobile device to the second electronic mobile device by using the wireless communication protocol.

10. The contact list sharing method of claim 9 further comprising the second mobile electronic device merging the contact list of the first mobile electronic device with a virtual group contact list of the second mobile electronic device.

11. The contact list sharing method of claim 1 wherein the wireless communication protocol is based on Bluetooth, WiFi, or WiFi direct.

12. The contact list sharing method of claim 1 wherein the steps of broadcasting, confirming, and merging is only performed at a predetermined time, a predetermined location, or both.

13. A non-transitory machine readable media comprising:
computer code which when executed by a processor of a first mobile electronic device broadcasts a polling signal based on a wireless communication protocol;
computer code which when executed by a processor confirms, by the first mobile electronic device, whether there is a second mobile electronic device using the wireless communication protocol by receiving a response signal, which is in response to the polling signal, from the second mobile electronic device; and
computer code which when executed by a processor merges a contact list of the second mobile electronic device into a virtual group contact list of the first mobile electronic device when the first mobile electronic device receives the response signal.
